# EUROPEAN PATENT SPECIFICATION

(11) **EP 4 415 074 B1**
(45) Date of publication and mention of the grant of the patent: **14.01.2026**
(21) Application number: 24155034.2
(22) Date of filing: 31.01.2024
(51) Int. Cl.: H01M 4/38, H01M 4/04, H01M 4/133, H01M 4/134, H01M 4/1393, H01M 4/1395, H01M 4/36

(54) **POROUS SILICON NEGATIVE ELECTRODE MATERIAL, SILICON NEGATIVE ELECTRODE SHEET, AND LITHIUM-ION BATTERY**
PORÖSES SILICIUM-NEGATIVELEKTRODENMATERIAL, SILICIUM-NEGATIVELEKTRODENFOLIE UND LITHIUM-IONEN-BATTERIE
MATÉRIAU D'ÉLECTRODE NÉGATIVE EN SILICIUM POREUX, FEUILLE D'ÉLECTRODE NÉGATIVE EN SILICIUM ET BATTERIE AU LITHIUM-ION

(30) Priority: 10.02.2023 CN 202310095402
(43) Date of publication of application: 14.08.2024
(73) Proprietor: Jiangsu Zenergy Battery Technologies Group Co., Ltd., Suzhou City, Jiangsu 215500 (CN)
(72) Inventor: ZHONG, Yingsheng, Suzhou City, 215500 (CN); TANG, Wen, Suzhou City, 215500 (CN); LIU, Jiao, Suzhou City, 215500 (CN); ZHANG, Hao, Suzhou City, 215500 (CN); JIANG, Kecheng, Suzhou City, 215500 (CN)
(74) Representative: Novagraaf Group

(56) References cited:
- WO-A1-2022/111830
- CN-A- 109 273 680
- CN-A- 111 211 314
- US-A1- 2022 173 386
- US-B2- 11 349 120

## Description

### Technical Field

The present disclosure relates to the technical field of lithium-ion batteries, and in particular, to a porous silicon negative electrode material, a silicon negative electrode sheet, and a lithium-ion battery.

### Background

At present, lithium-ion batteries (LIBs) have been widely used in portable devices and electronic products; however, there are still some problems in applications of the lithium-ion batteries in electric vehicles and renewable energy storage power grids, including energy density, material cost and use safety, etc. Therefore, increasing the energy density and cycle life of the lithium-ion battery is a very important aspect.

Silicon (Si) has an excellent theoretical specific surface area capacity, and is developed and considered as one of the most attractive candidate negative electrode materials; and a silicon negative electrode has a very high theoretical capacity (4200 mAh/g), which is about 10 times the capacity of current available commercial graphite negative electrode (about 370 mAh/g), and has great application potential.

Unfortunately, intercalation and deintercalation processes of a large number of lithium ions are accompanied by volume expansion and contraction of a silicon negative electrode material, which causes crushing of material particles, deterioration of electrical contact and unstablility of an SEI film, and finally decreases the efficiency of the silicon negative electrode material and speeds up the attenuation of the cycle capacity. However, during lithium intercalation, volume expansion of a SiOₓ (0<x<2) negative electrode material is much smaller than that of a pure-silicon negative electrode material, and expansion and contraction are lighter than that of a silicon negative electrode material body; in addition, a carbon material has a certain mechanical strength and electrical conductivity, and how to design a carbon structure to better solve the volume expansion effect of the silicon negative electrode material and improve the battery cycle performance are still main concerns. CN 111 211 314 A, CN 109 273 680 A and US 11 349 120 B2 disclose silicon-containing negative electrode materials.

### Summary

The present disclosure aims to overcome the defects existing in the related art, and some embodiments provide a porous silicon negative electrode material; the porous silicon negative electrode material is provided with a sparse-silicon inner core, a transition ring and a dense-silicon ring which have sequentially reduced porosity and sequentially increased distribution density of silicon, thereby increasing the compressive strength of the porous silicon negative electrode material, effectively reducing the expansion and contraction stress of the electrode material during cycle and slowing down the capacity attenuation, and thus the battery capacity retention rate is high, and the cycle performance is stable.

In order to solve the described technical problem, the present disclosure provides the following technical solutions.

According to a first aspect, the present invention provide a porous silicon negative electrode material according to claim 1.

Further, in the porous silicon negative electrode material, the mass proportion of the silicon particles is 5%-90%.

Further, the silicon particles include at least one of silicon elementary substance and SiOₓ (0< x <2), and the size of the silicon particles is 1.2-20 nm.

Further, when the size of the silicon particles is 1.2-6.8 nm, the obtained negative electrode material is a fine silicon crystal-type porous silicon negative electrode material; and when the size of the silicon particles is 6.8-20 nm, the obtained negative electrode material is a coarse silicon crystal-type porous silicon negative electrode material.

Further, the silicon content in the sparse-silicon inner core accounts for 45%-87% of the total silicon content, and the silicon content in the transition ring and the dense-silicon ring accounts for 13%-55% of the total silicon content; and the silicon content in the sparse-silicon inner core is greater than the silicon content in the dense-silicon ring, and the silicon content in the dense-silicon ring is greater than the silicon content in the transition ring.

Further, the radius of the sparse-silicon inner core is 3.5-9.5 µm, the thickness of the transition ring is 15-80 nm, and the thickness of the dense-silicon ring is 12-75 nm.

Further, the carbon coating layer includes a first carbon layer and a second carbon layer, and the first carbon layer is coated on the dense-silicon ring; wherein the first carbon layer is a porous carbon layer and the second carbon layer is a non-porous carbon layer.

Further, the total thickness of the first carbon layer and the second carbon layer is 5-400 nm, and the thickness of the first carbon layer is less than the thickness of the second carbon layer.

Further, the second carbon layer further contains metal elements, and the metal elements include at least one of lithium, magnesium and aluminium.

Further, the mass of Si, Qₛᵢ, the mass of O, Qₒ and the mass of C, Q_{c}, in the porous silicon negative electrode material satisfy Qₛᵢ/Qₒ ≤ Qₛᵢ/Q_{c}.

According to a second aspect, the present disclosure provide a silicon negative electrode sheet, including a negative electrode current collector and a negative electrode material layer formed on at least one side surface of the negative electrode current collector, wherein the negative electrode material layer includes a negative electrode active material, a conductive agent and a binder, and the negative electrode active material includes a graphite negative electrode material and the porous silicon negative electrode material as described above; in the negative electrode active material, the mass proportion of the porous silicon negative electrode material is 0.4-80%.

Further, the negative electrode material layer includes a negative electrode coating A and/or a negative electrode coating B, and the number of negative electrode material layers on any side surface of the negative electrode current collector is ≤3; wherein the porous silicon negative electrode material in the negative electrode coating A is a fine silicon crystal-type porous silicon negative electrode material, and the porous silicon negative electrode material in the negative electrode coating B is a coarse silicon crystal-type porous silicon negative electrode material.

Further, the negative electrode material layer includes a negative electrode coating A and a negative electrode coating B, and the negative electrode coating A is located outside the negative electrode coating B.

Further, the thickness of the silicon negative electrode sheet is 18-430 µm, and the areal density of the negative electrode material layer on the silicon negative electrode sheet is 0.0028-0.063 g/cm².

According to a third aspect, the present disclosure provide a lithium-ion battery, including a positive electrode sheet, a negative electrode sheet, a separator and an electrolyte, wherein the separator is configured to separate the positive electrode sheet from the negative electrode sheet, and the negative electrode sheet is the silicon negative electrode sheet as described above.

Compared with the related art, the present disclosure has the following beneficial effects:
1. The porous silicon negative electrode material in the present disclosure includes a sparse-silicon inner core, a transition ring, a dense-silicon ring and a carbon coating layer in sequence, and silicon particles and pores are uniformly distributed in a carbon matrix, wherein the porosity of the sparse-silicon inner core, the transition ring and the dense-silicon ring decreases in sequence, thereby forming a silicon-carbon structure composite material having a "spring inner core". In such a composite material, the carbon matrix in the sparse-silicon inner core is a "dense mesh", in which a large number of pores are distributed, so that an interior deformable space is large, being more resistant to the volume expansion of the sparse-silicon inner core; furthermore, silicon particles are embedded in "dense mesh"-structured carbon, so that multi-point contact can be achieved by using the "dense mesh"-structured carbon, thereby increasing the contact area and improving the electrical conductivity.
2. Regarding the porous silicon negative electrode material in the present disclosure, a carbon coating layer thereof includes a first carbon layer and a second carbon layer, wherein the first carbon layer located on the inner side is a porous carbon layer, and a "sparse mesh"-structured carbon layer thereof has greater elasticity, and can better buffer the volume change of the inner core without breaking; while the second carbon layer on the outer side is a non-porous or low-porosity dense carbon layer, and the covering property of such a dense carbon layer is more complete, and the compressive strength thereof is greatly improved, thereby reducing silicon particles in the sparse-silicon inner core, the transition ring and the silicon-dense ring from falling into the electrolyte. In addition, a certain amount of lithium, magnesium or other metals may be added to the second carbon layer, which not only can achieve a lithium supplementing effect, but also can improve the electrical conductivity of the negative electrode material.
3. In the porous silicon negative electrode material of the present disclosure, "sparse mesh"-structured carbon in the sparse-silicon inner core and the first carbon layer has good flexibility, large pore space and high mechanical strength, and can resist expansion and contraction stress during lithium intercalation and deintercalation; and the porous carbon dispersed in the sparse-silicon inner core and the double carbon coating layers outside the sparse-silicon inner core impart good electrical conductivity to the negative electrode material.

### Brief Description of the Drawings

Fig. 1 is a schematic diagram of a cross-sectional structure of a porous silicon negative electrode material in some embodiments of the present disclosure; and
Fig. 2 is a cross-sectional TEM picture of a porous silicon negative electrode material in some embodiments of the present disclosure.

In which: 1. Sparse-silicon inner core; 2. Transition ring; 3. Dense-silicon ring; 4. First carbon layer 5. Second carbon layer.

### Detailed Description of the Embodiments

Unless otherwise defined, all technical and scientific terms used herein have the same meanings as those commonly understood by a person skilled in the technical field to which the present disclosure belongs. The terms used in the description of the present disclosure are for the purpose of describing particular embodiments only, and are not intended to limit some embodiments of the present disclosure. As used herein, the term "and/or" includes any and all combinations of one or more associated listed items.

A silicon negative electrode material has a theoretical specific capacity of up to 4200 mAh/g, and is the next generation of negative electrode material most likely to replace graphite. However, during operation of a silicon negative electrode battery, intercalation and deintercalation of a large number of lithium ions are accompanied by volume expansion and contraction of a silicon negative electrode material, which causes crushing of negative electrode material particles, deterioration of electrical contact and unstablility of an SEI film, and finally decreases the efficiency of the silicon negative electrode material and speeds up the attenuation of the cycle capacity. The described various problems limit wide application of silicon materials in lithium-ion battery negative electrode materials.

With regard to the described various defects of the silicon negative electrode material, the inventor provides a porous silicon negative electrode material; and by a special structural design, the volume expansion effect of the silicon negative electrode material is solved, and the battery cycle performance is improved, thereby completing the present disclosure.

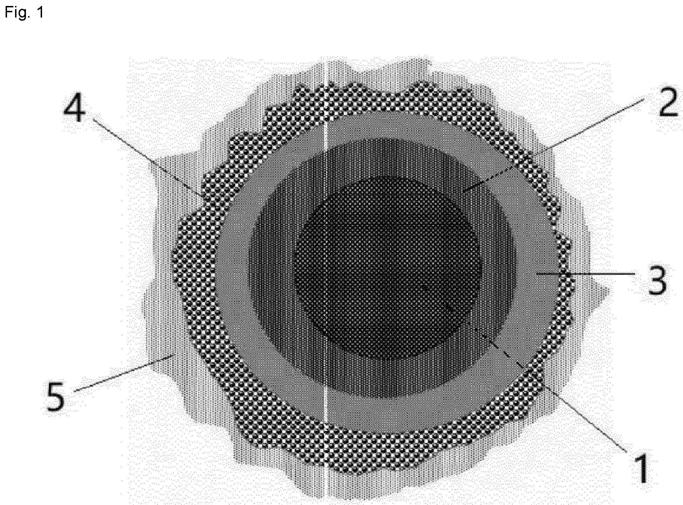

Specifically, referring to a schematic diagram of a cross-sectional structure of Fig. 1, the porous silicon negative electrode material of some embodiments of the present disclosure has a spherical shape as a whole, and includes a sparse-silicon inner core 1, a transition ring 2, a dense-silicon ring 3 and a carbon coating layer sequentially from inside to outside. The sparse-silicon inner core 1 and the transition ring 2 are both silicon-carbon composite layers. The silicon-carbon composite layers include a carbon matrix, silicon particles and pores, wherein the carbon matrix is continuously distributed, and the silicon particles and the pores are uniformly distributed in the carbon matrix. The dense-silicon ring 3 is a silicon layer.

In some embodiments of the present disclosure, the sparse-silicon inner core is a porous structure, which has the highest porosity and the lowest silicon density (which refers to the distribution density of silicon). The carbon matrix in the sparse-silicon inner core is a "dense mesh" porous structure carbon, that is, the carbon matrix is in a mesh porous structure, and the silicon particles are embedded in the "dense mesh" porous structure carbon. Such a sparse-silicon inner core has a very high pore volume and a relatively large deformable space, so that volume expansion of the silicon particles can be well buffered.

In some embodiments of the present disclosure, the radius of the sparse-silicon inner core is 3.5-9.5 µm, for example, may be 3.5-4 µm, 4-4.5 µm, 4.5-5 µm, 5-5.5 µm, 5.5-6 µm, 6-6.5 µm, 6.5-7 µm, 7-7.5 µm, 7.5-8 µm, 8-8.5 µm, 8.5-9 µm, 9-9.5 µm, or any range between these numerical values. The sparse-silicon inner core is the region with the largest silicon content in the porous silicon negative electrode material, and the silicon content thereof preferably accounts for 45%-87% of the total silicon content. Here, "total silicon content" refers to the percentage of the mass of the silicon particles in the porous silicon negative electrode material accounting for the mass of the porous silicon negative electrode material. In some embodiments, the silicon content of the sparse-silicon inner core may account for 45%-46%, 46%-48%, 48%-50%, 50%-52%, 52%-55%, 55%-58%, 58%-60%, 60%-62%, 62%-65%, 65%-68%, 68%-70%, 70%-72%, 72%-75%, 75%-78%, 78%-80%, 80%-82%, 82%-85%, 85%-87%, or any range between these numerical values, of the total silicon content.

In some embodiments of the present disclosure, the dense-silicon ring is formed by dispersing silicon to the outer side during high-temperature treatment, and therefore the dense-silicon ring is a dense silicon layer, and the content of carbon and pores therein is small.

In some embodiments of the present disclosure, the thickness of the dense-silicon ring is 12-75 nm, for example, may be 12-15 nm, 15-20 nm, 20-25 nm, 25-30 nm, 30-35 nm, 35-40 nm, 40-45 nm, 45-50 nm, 50-55 nm, 55-60 nm, 60-65 nm, 65-70 nm, 70-75 nm, or any range between these numerical values. The silicon content in the dense-silicon ring preferably accounts for 15%-50% of the total silicon content. In some embodiments, the silicon content in the dense-silicon ring may account for 15%-18%, 18%-20%, 20%-22%, 22%-25%, 25%-28%, 28%-30%, 30%-32%, 32%-35%, 35%-38%, 38%-40%, 40%-42%, 42%-45%, 45%-48%, 48%-50%, or any range between these numerical values, of the total silicon content,.

In some embodiments of the present disclosure, the inner side of the transition ring is connected to the sparse-silicon inner core, and the outer side thereof is covered with the described dense-silicon ring. The porosity and silicon density of the transition ring are between those of the sparse-silicon inner core and of the dense-silicon ring; namely, the porosity of the transition ring is lower than that of the sparse-silicon inner core and higher than that of the dense-silicon ring; and the silicon density of the transition ring is higher than that of the sparse-silicon inner core and lower than that of the dense-silicon ring. The transition ring mainly includes a carbon matrix, silicon particles and pores, wherein the carbon matrix includes both porous carbon and non-porous carbon, and the silicon particles are uniformly distributed inside the porous carbon and non-porous carbon. Preferably, the part of the transition ring close to the sparse-silicon inner core is mainly "dense mesh" porous carbon, while the part close to the dense-silicon ring is mainly non-porous carbon.

In some embodiments of the present disclosure, the thickness of the transition ring is 15-80 nm, for example, may be 15-20 nm, 20-25 nm, 25-30 nm, 30-35 nm, 35-40 nm, 40-45 nm, 45-50 nm, 50-55 nm, 55-60 nm, 60-65 nm, 65-70 nm, 70-75 nm, 75-80 nm, or any range between these numerical values. The silicon content in the transition ring preferably accounts for 0.3%-15% of the total silicon content. In some embodiments, the silicon content in the transition ring may account for 0.3%-1%, 1%-3%, 3%-5%, 5%-8%, 8%-10%, 10%-12%, 12%-15%, or any range between these numerical values, of the total silicon content.

Hence, in the present disclosure, by controlling the porosity of the sparse-silicon inner core, the transition ring and the dense-silicon ring inside the porous silicon negative electrode material to decrease in sequence, a silicon-carbon structure composite material having a "spring inner core" is formed. In such a silicon-carbon composite material, the carbon matrix in the sparse-silicon inner core is a "dense mesh", in which a large number of pores are distributed, so that an interior deformable space is large, being more resistant to the volume expansion of the sparse-silicon inner core; however, the porosity of the transition ring and the dense-silicon ring sequentially decreases, and the dense-silicon ring mainly contains non-porous carbon, which is dense and has a higher mechanical strength, being beneficial for maintaining the interface stability of the porous silicon negative electrode material.

Please refer to Fig. 1, in some embodiments of the present disclosure, the carbon coating layer preferably includes a first carbon layer 4 and a second carbon layer 5, wherein the first carbon layer 4 covers the dense-silicon ring 3, and the second carbon layer 5 covers the first carbon layer 4. The first carbon layer 4 is a porous carbon layer, and the second carbon layer 5 is a dense carbon layer.

Specifically, the first carbon layer is a porous fluffy structure, which is mainly composed of "sparse mesh" porous structured carbon, and the porosity thereof is generally not less than 10%. Similar to "dense mesh" porous structured carbon, the carbon matrix in the "sparse mesh" porous structured carbon also has a mesh porous structure, and the carbon network is more sparse, and therefore the porosity thereof is also larger. Opposite to the first carbon layer, the second carbon layer is a non-porous carbon layer, the carbon matrix therein mainly contains non-porous carbon, has few pores, and the proportion of pores is 1% or less.

Please refer to Fig. 1, in some embodiments, the thicknesses of various positions of each of the first carbon layer and the second carbon layer are different, and the surfaces of the first carbon layer and the second carbon layer present uneven morphology. Preferably, the thickness of the first carbon layer needs to be controlled to be ≥2 nm, and the thickness of the second carbon layer needs to be controlled to be ≥3 nm.

In some preferred embodiments, the thickness of the carbon coating layer (the first carbon layer + the second carbon layer) is 5-400 nm, such as 5 nm, 6 nm, 12 nm, 18 nm, 30 nm, 35 nm, 50 nm, 60 nm, 90 nm, 100 nm, 120 nm, 150 nm, 160 nm, 180 nm, 190 nm, 200 nm, 220 nm, 250 nm, 280 nm, 300 nm, 350 nm, 370 nm, 390 nm, 400 nm, etc. More preferably, the average thickness of the first carbon layer is less than the average thickness of the second carbon layer.

In some embodiments of the present disclosure, the carbon coating layer can be obtained by conventional coating methods in the art, and these conventional coating methods include, but are not limited to, CVD vapor deposition, liquid phase deposition, solid phase coating, liquid phase coating, and the like, and then the carbon coating layer is obtained by high-temperature carbonization.

In some embodiments, a certain content of metal elements may also be added to the second carbon layer, and the metal elements include, but are not limited to, at least one of lithium, magnesium, aluminum, and the like. The addition of such metal elements can not only achieve the effect of lithium supplementing, but also improve the electrical conductivity of the negative electrode material.

In some embodiments of the present disclosure, the silicon particles include at least one of silicon elementary substance and silicon oxide. The silicon oxide has a molecular formula of SiOₓ (0<x<2), such as silicon monoxide SiO. Preferably, in the sparse-silicon inner core, the transition ring and the dense-silicon ring, the silicon elementary substance and the silicon oxide co-exist, with the silicon elementary substance predominating and a small part of silicon oxide.

In some embodiments of the present disclosure, the size of the silicon particles may be 1.2-20 nm, for example, 1.2 nm, 1.3 nm, 1.4 nm, 1.5 nm, 1.6 nm, 1.7 nm, 1.8 nm, 1.9 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 11 nm, 12 nm, 13 nm, 14 nm, 15 nm, 16 nm, 17 nm, 18 nm, 19 nm, 20 nm, etc.

In some embodiments of the present disclosure, when the size of the silicon particles is 1.2-6.8 nm, the obtained negative electrode material is a fine silicon crystal-type porous silicon negative electrode material; and when the size of the silicon particles is 6.8-20 nm (not including 6.8 nm), the obtained negative electrode material is a coarse silicon crystal-type porous silicon negative electrode material.

In the process of preparing the porous silicon negative electrode material, the size of the silicon particles can be controlled by controlling the temperature holding temperature and the temperature holding time, and the higher the temperature, the longer the temperature holding time, and the more beneficial to the growth of the silicon particles; and increasing the temperature holding temperature or prolonging the temperature holding time can control the transformation of the silicon particles from fine silicon crystal-type to coarse silicon crystal-type.

In some embodiments of the present disclosure, in the porous silicon negative electrode material, the mass proportion of the silicon particles is 5%-90%, for example, may be 5%-10%, 10%-20%, 20%-30%, 30%-40%, 40%-50%, 50%-60%, 60%-70%, 70%-80%, 80%-90%, or any range between these numerical values.

Preferably, in the porous silicon negative electrode material, the masses of Si, O and C (respectively denoted as Qₛᵢ, Qₒ and Q_{c}) satisfy Qₛᵢ/Qₒ ≤ Qₛᵢ/Q_{c}.

In some embodiments of the present disclosure, in a preparation process of the porous silicon negative electrode material, processing such as crushing and ball milling is performed, and the porous silicon negative electrode material may be in particle shapes such as sphere, ellipsoid, block, strip, and sheet. Therefore, in addition to the shape as shown in Fig. 1, two-dimensional cross sections of the sparse-silicon region, the transition ring, the dense-silicon ring and the carbon coating layer in the porous silicon negative electrode material may also be in the shape of an ellipse, an irregular polygon, a circular ring, a polygonal ring, an arc-shaped ring, an irregular ring, an irregular edge, etc.

Some embodiments of the present disclosure also provide a preparation method for the porous silicon negative electrode material, including the following steps:
S1, mixing a silicon source compound, a carbon source compound and a pore-forming agent, vacuumizing same and then heating same; then introducing a non-oxidizing gas, stabilizing same and then decreasing the temperature to obtain a mixed solid;
S2, performing high-temperature heating on the mixed solid and then pulverizing same, and then mixing same with hydrofluoric acid for acid-washing, to obtain a porous silicon precursor;
S3, under an atmosphere of the non-oxidizing gas, mixing the porous silicon precursor with monosilane and/or disilane, for a first vapor deposition reaction; then introducing an acetylene mixed gas with the non-oxidizing gas as a carrier gas for a second vapor deposition reaction, so as to obtain a reaction product; and
S4, mixing the reaction product with a dispersant and an optional additive, and performing spray drying and then performing a high-temperature reaction, to obtain the porous silicon negative electrode material.

In step S1, the silicon source compound is one or more of tetraethy lorthosilicate, polyorganosiloxane, methyl chlorosilane, silicon gel, and SiO₂ which has a particle size of 3-200 µm.

The carbon source compound is one or more of asphalt resin, phenolic resin, furan resin and polyacrylonitrile;
the mass ratio of the silicon source compound, the carbon source compound and ammonium bicarbonate is 100:5-80:0.01-0.5;
the pore-forming agent is one or more of ammonium bicarbonate, ammonium chloride and ammonium carbonate;
the non-oxidizing gas is one or more of nitrogen, helium, neon, and argon; and
the heating temperature is 60-200°C, for example, 60°C, 80°C, 100°C, 120°C, 150°C, 160°C, 180°C, 200°C, etc.

In step S2, the high-temperature heating temperature is 600-1300°C, for example, 600°C, 650°C, 700°C, 750°C, 800°C, 850°C, 900°C, 950°C, 1000°C, 1050°C, 1100°C, 1150°C, 1200°C, 1250°C, 1300°C, and the like;
the particle size of the particles after pulverizing is 0.6-50 µm, for example, may be 0.6-1 µm, 1-2 µm, 2-5 µm, 5-8 µm, 8-10 µm, 10-15 µm, 15-20 µm, 20-30 µm, 30-40 µm, 40-50 µm, etc.

In step S3, the temperature of the first vapor deposition reaction is 300-600°C, for example, may be 300°C, 350°C, 400°C, 450°C, 500°C, 550°C, 600°C, etc.; the time for the first vapor deposition reaction is 1-8 h, for example, may be 1 h, 2 h, 3 h, 4 h, 5 h, 6 h, 7 h, 8 h, etc.;
in the acetylene mixed gas with the non-oxidizing gas as a carrier gas, the volume proportion of the non-oxidizing gas is 50-98%, for example, may be 50%, 55%, 60%, 65%, 70%, 75%, 80%, 85%, 90%, 95%, 98%, etc.; the non-oxidizing gas is one or more of nitrogen, helium, neon, and argon; and
the temperature of the second vapor deposition reaction is 500-1300°C, e.g. may be 500°C, 550°C, 600°C, 650°C, 700°C, 750°C, 800°C, 850°C, 900°C, 950°C, 1000°C, 1050°C, 1100°C, 1150°C, 1200°C, 1250°C, 1300°C, etc.; and the time for the second vapor deposition reaction is 3 min-10 h, for example, may be 3 min, 5 min, 10 min, 20 min, 30 min, 1 h, 2 h, 3 h, 5 h, 6 h, 8 h, 10 h, etc.

In step S4, the mass ratio of the reaction product, the additive and the dispersant is 100:0.01 - 8:0.05-3;
the additive includes one or more of lithium chloride, butyl lithium, lithium phosphate, lithium metaaluminate, lithium aluminate, magnesium metaaluminate, magnesium aluminate, lithium isopropoxide, lithium bromide, phenyl lithium, lithium aluminate, magnesium bromide and magnesium chloride;
the dispersant is one or more of ethylene glycol and glycerol; and
the high-temperature reaction temperature is 400-800°C, for example, 400°C, 450°C, 500°C, 550°C, 600°C, 650°C, 700°C, 750°C, 800°C and the like.

In some embodiments of the present disclosure, in step S1, after the silicon source compound, the carbon source compound and the pore-forming agent are mixed, heated and cooled, the silicon source and the carbon source are sufficiently dispersed and cured to form a solid mixture, and during heating, a part of the pore-forming agent is decomposed to generate gas, and the gas escapes, which causes the solid mixture to form a porous structure. In step S2, after the mixed solid is subjected to high-temperature heating, the silicon source compound and the carbon source compound therein are pyrolyzed to form silicon and a carbon matrix, and at the high temperature, the silicon slowly escapes to the circumferential direction. After crushing and acid-washing with hydrofluoric acid, a porous silicon precursor, i.e. the sparse-silicon inner core is obtained. The acid washing can remove a part of silicon in the carbon matrix, thereby increasing the pore volume and porosity inside the particles, and forming carbon in a mesh structure.

In step S3, the porous silicon precursor is mixed with monosilane and/or disilane, and after the first vapor deposition reaction, silicon particles formed by pyrolysis of monosilane and/or disilane are deposited on the surface of the porous silicon precursor to form a silicon deposition layer. Then, an acetylene mixed gas is introduced to perform a second vapor deposition reaction so as to form a porous carbon coating layer on the surface of the silicon deposition layer; a porous structure is formed in the carbon coating layer due to decomposition of the remaining pore-forming agent. In this heating process, silicon in the porous silicon precursor and the silicon deposition layer diffuses to the outer side, and a relatively dense silicon layer, i.e. the dense-silicon ring, is formed at the boundary between the silicon deposition layer and the carbon coating layer. Correspondingly, a silicon-carbon composite layer of a porous structure, i.e. the transition ring, is formed at the boundary between the silicon deposition layer and the porous silicon precursor; furthermore, due to the outward escape of silicon, the more outward the transition ring, the higher the silicon content, and the lower the porosity; and at the dense-silicon ring, there is essentially a non-porous pure-silicon region.

In step S4, by performing spray drying together with an additive and a dispersant, the dispersant is uniformly coated on the outside of the porous carbon coating layer, and is carbonized to form a dense carbon coating layer, i.e. obtaining the porous silicon negative electrode material of some embodiments of the present disclosure. The addition of the additive introduces metal elements such as lithium and magnesium into the dense carbon coating layer.

On the basis of the porous silicon negative electrode material, some embodiments of the present disclosure further provide a silicon-containing negative electrode sheet. The silicon-containing negative electrode sheet includes a negative electrode current collector and a negative electrode material layer, and the negative electrode material layer is formed on one side or two side surfaces of the negative electrode current collector. The negative electrode material layer includes a negative electrode active material, a conductive agent and a binder, wherein the negative electrode active material includes a graphite negative electrode material and the porous silicon negative electrode material.

In some embodiments of the present disclosure, a formulation method for a negative electrode slurry is: mixing a negative electrode active material, a conductive agent and a binder according to a certain ratio, then adding water for stirring, and adjusting the viscosity to obtain a negative electrode slurry. The negative electrode slurry is then coated or otherwise applied on at least one side surface of the negative electrode current collector to form a negative electrode material layer. In some embodiments, the negative electrode active material, the conductive agent, and the binder may be mixed at a ratio of 77-99.6%, 0.2-8% and 0.2-15.0%. For example, the proportion of the negative electrode active material may be 77-78%, 78-81%, 81-82%, 82-83%, 83-84%, 84-85%, 85-86%, 86-87%, 87-88%, 88-89%, 89-90%, 90-91%, 91-92%, 92-93%, 93-94%, 94-95%, 95-96%, 96-97%, 97-98%, 98-99%, 99-99.6% or the like.

In some embodiments of the present disclosure, the thickness of the silicon negative electrode sheet may be 18-430 µm, preferably 48-260 µm, and for example, may be 49 µm, 50 µm, 55 µm, 60 µm, 65 µm, 70 µm, 75 µm, 80 µm, 85 µm, 90 µm, 95 µm, 100 µm, 105 µm, 110 µm, 120 µm, 125 µm, 130 µm, 135 µm, 140 µm, 145 µm, 150 µm, 155 µm, 160 µm, 180 µm, 200 µm, 210 µm, 220 µm, 230 µm, 240 µm, 250 µm, 260 µm, and so on.

In some embodiments of the present disclosure, the areal density of the negative electrode material layer on the silicon negative electrode sheet is preferably 0.0028-0.063 g/cm²; if the areal density is too low, the energy density of the battery will be affected; and if the areal density is too high, wetting of the electrolyte and intercalation and deintercalation of lithium may be affected.

In some embodiments of the present disclosure, the negative electrode active material includes the described porous silicon negative electrode material and a graphite negative electrode material, wherein the graphite negative electrode material may use a graphite material commonly used in the art, including but not limited to at least one of natural graphite, artificial graphite, mesocarbon microbeads, soft carbon and hard carbon. The graphite material is the most widely used negative electrode active material, has good electrical conductivity, and can not only improve the electrical conductivity of the silicon material, but also can contribute to the capacity. Preferably, the graphite negative electrode material is one or more graphite obtained by high-temperature graphitization of petroleum coke, bituminous adhesive and needle coke, etc.

In some embodiments of the present disclosure, the mass proportion of the porous silicon negative electrode material in the negative electrode active material is 0.4-80%, for example, may be 0.4%-1%, 1%-5%, 5%-10%, 10%-20%, 20%-30%, 30%-40%, 40%-50%, 50%-60%, 60%-70%, 70%-80%, or any range between these numerical values.

In some embodiments of the present disclosure, the negative electrode current collector may be one or more of copper foil, porous copper foil, foamed nickel/copper foil, galvanized copper foil, nickel-plated copper foil, carbon-coated copper foil, nickel foil, titanium foil, and carbon-containing porous copper foil. The negative electrode current collector is preferably copper foil, galvanized copper foil, nickel-plated copper foil and carbon-coated copper foil.

In some embodiments of the present disclosure, the binder may be at least one of monomers, polymers and copolymers of acrylonitrile, vinylidene fluoride, vinyl alcohol, carboxymethyl cellulose, lithium carboxymethyl cellulose, sodium carboxymethyl cellulose, methacryloyl, acrylic acid, lithium acrylate, acrylamide, amide, imide, acrylate, styrene butadiene rubber, sodium alginate, chitosan, ethylene glycol, or guar gum.

In some embodiments of the present disclosure, the conductive agent may be at least one of conductive carbon black, acetylene black, graphite, graphene, carbon micro/nanowire-like conductive materials, and carbon micro/nanotube-like conductive materials.

In preferred embodiments, there are two kinds of negative electrode slurries, which are negative electrode slurry A and negative electrode slurry B, respectively. The porous silicon negative electrode material in the negative electrode slurry A is a fine silicon crystal-type porous silicon negative electrode material, and the porous silicon negative electrode material in the negative electrode slurry B is a coarse silicon crystal-type porous silicon negative electrode material. The negative electrode slurry A or the negative electrode slurry B is coated on the negative electrode current collector to respectively obtain the negative electrode coating A and the negative electrode coating B.

In some embodiments, the negative electrode slurry A may be coated on a surface on either side of the front and back of the negative electrode current collector to form n layers (n=1, 2, 3) of the negative electrode coating A. In some other embodiments, the negative electrode slurry A and/or the negative electrode slurry B may be coated on a surface on either side of the front and back of the negative electrode current collector to form n layers (n=1, 2, 3) of the negative electrode coating A and the negative electrode coating B.

Preferably, when the negative electrode slurry A and the negative electrode slurry B are both coated on a side surface of the negative electrode current collector, the negative electrode coating A is coated on the negative electrode coating B, that is, the negative electrode coating A is located on the outermost side.

The coarse silicon crystal-type porous silicon negative electrode material has large silicon crystals, and is prone to crack during lithium deintercalation, resulting in re-growth of a battery SEI film, leading to a poor cycle; and the fine silicon crystal-type porous silicon negative electrode material has small silicon crystals, is less easily cracked during lithium deintercalation, and the material structure is stable. In some embodiments of the present disclosure, different silicon crystal-type negative electrode slurries A and B are obtained by dividing a coarse silicon crystal-type porous silicon negative electrode material and a fine silicon crystal-type porous silicon negative electrode material. On the one hand, the coarse silicon crystal-type porous silicon negative electrode material is still adopted to exert the capacity thereof; and on the other hand, the negative electrode slurry A made of the fine silicon crystal-type porous silicon negative electrode material is coated on the negative electrode coating B, and acts as the outermost layer in contact with the electrolyte; and by using the characteristics of less cracking during lithium deintercalation and stable material structure, the cracking and detachment of material on the surface of the silicon negative electrode sheet can be reduced.

Further, some embodiments of the present disclosure provide a lithium-ion battery, including the silicon negative electrode sheet as described above. A schematic preparation method is: winding the described silicon negative electrode sheet, a separator and a positive electrode sheet to obtain a cell, then assembling the cell into a battery housing, and performing processes of drying, electrolyte injection, encapsulation, formation and capacity division, etc., thereby obtaining the lithium-ion battery.

In the positive electrode sheet, a positive electrode active material may be at least one of lithium cobalt oxide, lithium nickelate, lithium manganete, lithium nickel manganete, lithium nickel cobalt manganate, lithium nickel cobalt aluminate, lithium manganese phosphate, lithium iron manganese phosphate and lithium iron phosphate.

Hereinafter, the present disclosure will be further described with reference to the specific embodiments, so that a person skilled in the art could better understand some embodiments of the present disclosure and implement same, but the embodiments listed are not intended to limit some embodiments of the present disclosure.

Unless specially illustrated, experimental methods used in the following examples are all conventional methods; and unless specially illustrated, materials, reagents and the like used can all be obtained commercially.

### Example 1

### 1. Preparation method for porous silicon negative electrode material

S1. mixing tetraethylorthosilicate, phenolic resin and ammonium bicarbonate at a mass ratio of 100:50:0.2, vacuumizing same and then heating at 70°C, then introducing argon gas, stabilizing same and then decreasing the temperature to obtain a mixed solid.

S2. heating the mixed solid at 700°C, and then pulverizing same to particles having particle size of 2.4-23 µm; and then mixing same with hydrofluoric acid for acid-washing, to obtain a porous silicon precursor.

S3. mixing the porous silicon precursor with monosilane, performing temperature holding treatment at 550°C for 4 h, and then introducing an acetylene mixed gas with the argon gas as a carrier gas (the volume proportion of the argon gas was being 50%) for a vapor deposition reaction, the temperature of the vapor deposition reaction was being 750°C, and the deposition time was being 45 min, so as to obtain a reaction product.

S4. mixing the reaction product with lithium metaaluminate and ethylene glycol at a mass ratio of 100:2:1.2, and performing spray drying, to obtain the porous silicon negative electrode material. In the negative electrode material, Si was of a fine silicon crystal-type, which accounted for 63% of the mass of the porous silicon negative electrode material.

### 2. Structure of the porous silicon negative electrode material

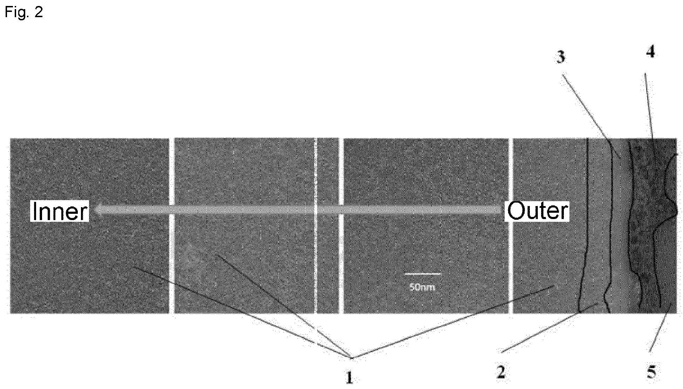

Powder of the porous silicon negative electrode material prepared in Example 1 was dispersed in an embedding resin, uniformly mixed, and vacuumized to remove bubbles; an embedding treatment was performed at 75°C, the embedding resin was solidified into a solid, the solid resin was cut to form a quadrilateral by using a blade, and then the solid resin was fixed on an ultra microtome; one short side of the quadrilateral faced the blade and was cut into nanoscale slices. The slices were observed by a transmission electron microscope, and the result was as shown in Fig. 2.

It could be determined from Fig. 2 that a sparse-silicon inner core 1, a transition ring 2, a dense-silicon ring 3, a first carbon layer 4 and a second carbon layer 5 were sequentially formed from inside to outside on the cross section of the porous silicon negative electrode material.

In Fig. 2, black corresponded to pores, dark corresponded to a carbon structure, white corresponded to silicon crystals, and the aggregation degree of small white points indicated the distribution density of silicon particles. It could be determined from Fig. 2 that a large number of small white dots, i.e. silicon crystals, were distributed in the sparse-silicon inner core 1, the transition ring 2 and the dense-silicon ring 3. The dense-silicon ring was blurred, and had little black and dark, which indicated that the main component was silicon, and the silicon particles were very fine and the silicon was relatively dense. In the sparse-silicon inner core, there were black, dark and white spots, which indicated that there were carbon, silicon and pores in the sparse-silicon inner core; and a lot of dark indicated that the content of pores was high; and in the transition ring, the contents and distribution of black, dark and white were between those of the sparse-silicon inner core and those of the dense-silicon ring, which indicated that the contents of silicon, carbon and pores were all between those of the dense-silicon inner core and those of the dense-silicon ring. A large number of black parts existing in the porous carbon layer were pores, and dark parts were carbon structures; however, the dense carbon layer had few black parts, and therefore was basically a dense carbon structure.

### 3. Preparation of a silicon negative electrode sheet

Mixing a negative electrode active material, a conductive agent and a binder at mass percentages of 96%, 1.5% and 2.5%, adding deionized water and stirring same, controlling the solid content at 50%, and adjusting the viscosity to 3100 mPa.s, to obtain a negative electrode slurry A; coating the negative electrode slurry A on a nickel-plated copper foil, to obtain a negative electrode coating A; and drying and tableting same to obtain a silicon negative electrode sheet with a thickness of 124 µm. The negative electrode active material was 15% of fine silicon crystal-type porous silicon negative electrode material + 85% of artificial graphite; the conductive agent was carbon nanotubes; and the binder was 95% of sodium carboxymethyl cellulose + 5% of styrene butadiene rubber.

### 4. Preparation of lithium-ion battery

Winding the silicon negative electrode sheet, a separator, and a lithium nickel cobalt manganate positive electrode sheet to obtain a cell, and assembling the cell into a battery housing, and performing drying, electrolyte injection, encapsulation, formation and capacity division to obtain a lithium-ion battery.

### Example 2

Example 2 differed from Example 1 in that:
A preparation method for a silicon negative electrode sheet was: mixing a negative electrode active material, a conductive agent and a binder at mass percentages of 95%, 2% and 3%, adding deionized water and stirring same, controlling the solid content at 50%, and adjusting the viscosity to 3000 mPa.s, to obtain a negative electrode slurry A; coating the negative electrode slurry A on a nickel-plated copper foil, to obtain a negative electrode coating A; and drying and tabletting same to obtain a silicon negative electrode sheet with a thickness of 108 µm. The negative electrode active material was 30% of fine silicon crystal-type porous silicon negative electrode material + 70% of artificial graphite; the conductive agent was carbon nanotubes; and the binder was 95% of sodium carboxymethyl cellulose + 5% of styrene butadiene rubber.

### Example 3

Example 3 differed from Example 1 in that:
A preparation method for a silicon negative electrode sheet was: mixing a negative electrode active material, a conductive agent and a binder at mass percentages of 96%, 1.5% and 2.5%, adding deionized water and stirring same, controlling the solid content at 50%, and adjusting the viscosity to 2700 mPa.s, to obtain a negative electrode slurry A; coating the negative electrode slurry A on the front and back surfaces of a nickel-plated copper foil, to obtain a two-layer negative electrode coating A; and drying and tabletting same to obtain a silicon negative electrode sheet with a thickness of 163 µm. The negative electrode active material was 15% of fine silicon crystal-type porous silicon negative electrode material + 85% of artificial graphite; the conductive agent was carbon nanotubes; and the binder was 95% of sodium carboxymethyl cellulose + 5% of styrene butadiene rubber.

### Example 4

Example 4 differed from Example 1 in that:
A preparation method for a silicon negative electrode sheet was: mixing a negative electrode active material, a conductive agent and a binder at mass percentages of 95%, 2% and 3%, adding deionized water and stirring same, controlling the solid content at 45%, and adjusting the viscosity to 4100 mPa.s, to obtain a negative electrode slurry A; coating the negative electrode slurry A on the front and back surfaces of a nickel-plated copper foil, to obtain a two-layer negative electrode coating A; and drying and tabletting same to obtain a silicon negative electrode sheet with a thickness of 162 µm. The negative electrode active material was 30% of fine silicon crystal-type porous silicon negative electrode material + 70% of artificial graphite; the conductive agent was 20% of conductive carbon black + 80% of carbon nanotubes; and the binder was 95% of sodium carboxymethyl cellulose + 5% of polyacrylonitrile.

### Example 5

Example 5 differed from Example 1 in that:

### 1. Preparation method for porous silicon negative electrode material

S1. mixing tetraethylorthosilicate, phenolic resin and ammonium bicarbonate at a mass ratio of 100:60:0.5, vacuumizing same and then heating at 70°C, then introducing argon gas, stabilizing same and then decreasing the temperature to obtain a mixed solid.

S2. heating the mixed solid at 750°C, and then pulverizing same to particles having particle size of 2.2-32 µm; and then mixing same with hydrofluoric acid for acid-washing, to obtain a porous silicon precursor.

S3. mixing the porous silicon precursor with monosilane, performing temperature holding treatment at 550°C for 6 h, and then introducing an acetylene mixed gas with the argon gas as a carrier gas (the volume proportion of the argon gas was being 50%) for a vapor deposition reaction, the temperature of the vapor deposition reaction was being 850°C, and the deposition time was being 1 h, so as to obtain a reaction product.

S4. mixing the reaction product with lithium metaaluminate and ethylene glycol at a mass ratio of 100:6:3, and performing spray drying, to obtain the porous silicon negative electrode material. In the negative electrode material, Si was of a coarse silicon crystal-type, which accounted for 67% of the mass of the porous silicon negative electrode material.

### 2. Preparation method for silicon negative electrode sheet:

Mixing a negative electrode active material, a conductive agent and a binder at mass percentages of 96%, 1.5% and 2.5%, adding deionized water and stirring same, controlling the solid content at 45%, and adjusting the viscosity to 4100 mPa.s, to obtain a negative electrode slurry A. The negative electrode active material was 15% of fine silicon crystal-type porous silicon negative electrode material (the negative electrode material prepared in Example 1) + 85% of artificial graphite; the conductive agent was 20% of conductive carbon black + 80% of carbon nanotubes; and the binder was 95% of sodium carboxymethyl cellulose + 5% of polyacrylonitrile.

Mixing a negative electrode active material, a conductive agent and a binder at mass percentages of 96%, 1.5% and 2.5%, adding deionized water and stirring same, controlling the solid content at 45%, and adjusting the viscosity to 3800 mPa.s, to obtain a negative electrode slurry B. The negative electrode active material was 15% of coarse silicon crystal-type porous silicon negative electrode material (the negative electrode material prepared in Example 5) + 85% of artificial graphite; the conductive agent was 20% of conductive carbon black + 80% of carbon nanotubes; and the binder was 95% of sodium carboxymethyl cellulose + 5% of polyacrylonitrile.

Coating the negative electrode slurry B on a nickel-plated copper foil to obtain a negative electrode coating B; and then, coating the negative electrode slurry A on the negative electrode coating B, and the negative electrode coating A was being the outermost layer, performing drying and tabletting to obtain a silicon negative electrode sheet having a thickness of 162 µm.

### Example 6

Example 6 differed from Example 5 in that:
A preparation method for a silicon negative electrode sheet was: mixing a negative electrode active material, a conductive agent and a binder at mass percentages of 95%, 2% and 3%, adding deionized water and stirring same, controlling the solid content at 45%, and adjusting the viscosity to 4300 mPa.s, to obtain a negative electrode slurry A. The negative electrode active material was 30% of fine silicon crystal-type porous silicon negative electrode material (the negative electrode material prepared in Example 1) + 70% of artificial graphite; the conductive agent was 20% of conductive carbon black + 80% of carbon nanotubes; and the binder was 95% of sodium carboxymethyl cellulose + 5% of polyacrylonitrile.

Mixing a negative electrode active material, a conductive agent and a binder at mass percentages of 95%, 2% and 3%, adding deionized water and stirring same, controlling the solid content at 45%, and adjusting the viscosity to 4300 mPa.s, to obtain a negative electrode slurry B. The negative electrode active material was 30% of coarse silicon crystal-type porous silicon negative electrode material (the negative electrode material prepared in Example 5) +70% of artificial graphite; the conductive agent was 20% of conductive carbon black + 80% of carbon nanotubes; and the binder was 95% of sodium carboxymethyl cellulose + 5% of polyacrylonitrile.

Coating the negative electrode slurry B on a nickel-plated copper foil to obtain a negative electrode coating B; and then, coating the negative electrode slurry A on the negative electrode coating B, and the negative electrode coating A was being the outermost layer, performing drying and tabletting to obtain a silicon negative electrode sheet having a thickness of 148 µm.

### Comparative Example 1

Comparative Example 1 differed from Example 1 in that: there was no step S2, and the porous silicon negative electrode material had no sparse-silicon inner core.

### Comparative Example 2

Comparative Example 2 differed from Example 1 in that: there was no step S4, and the porous silicon negative electrode material had no carbon coating layer on the outer side.

### Comparative Example 3

Comparative Example 3 differed from Example 5 in that: there was no negative electrode coating A.

### Performance test

1. Dv10 compressive strength, powder resistance and battery silicon negative electrode sheet expansion situation under full charge of a porous silicon negative electrode material:
(1) Dv10 compressive strength: mounting a silicon negative electrode material to a square tank; pressing the silicon negative electrode material in the square tank under pressures of 1.3 MPa and 2.6 MPa; recording a Dv10 (granularity of the silicon negative electrode material in 10% of volume distribution, µm) change situation before and after the pressing; the smaller the granularity change of the silicon negative electrode material, the higher the Dv10 compressive strength;
(2) Powder resistance: a powder resistance detector was used to measure the powder resistances of the silicon negative electrode material of various examples and comparative examples;
(3) Expansion rate: the thickness of the silicon negative electrode sheet after tabletting and the thickness of the battery electrode sheet under full charge were measured, the expansion rate of the silicon negative electrode sheet = (the thickness of the battery electrode sheet under full charge - the thickness of the silicon negative electrode sheet after tabletting) / the thickness of the silicon negative electrode sheet after tabletting * 100%.

2. Battery electrical performance test:
When the initial voltage was 2.8 V and the cut-off voltage was 4.35 V respectively at 25°C, the battery was first charged at 1 C to 4.35 V, then charged at a constant voltage of 4.35 V until the current decreases to 0.05 C, then discharged at 0.5 C to 2.8 V, then charged at 1 C to 4.35 V, then charged at a constant voltage of 4.35 V until the current decreases to 0.05C, and discharged at 0.5 C to 2.8 V, and the battery was circularly charged and discharged in this manner. The capacity retention rates were calculated for the 100th, 500th and 800th cycles.

**Table 1 Dv10 compressive strength of silicon negative electrode material**

| | Dv10 (µm) | | |
|---|---|---|---|
| | Before pressing | Pressing at 1.3 Mpa | Pressing at 2.6 Mpa |
| Example 1 | 3.53 | 2.44 | 2.33 |
| Example 2 | 3.46 | 3.34 | 3.22 |
| Example 3 | 3.57 | 3.42 | 3.37 |
| Example 4 | 3.55 | 3.31 | 3.29 |
| Example 5 | 3.43 | 3.37 | 3.25 |
| Example 6 | 3.49 | 3.36 | 3.22 |
| Comparative Example 1 | 3.52 | 3.21 | 3.19 |
| Comparative Example 2 | 3.54 | 3.24 | 3.16 |
| Comparative Example 3 | / | / | / |

Please refer to Table 1, when pressing at 1.3 MPa and pressing at 2.6 MPa, the Dv10 compressive strength of the silicon negative electrode materials of Comparative Examples 1-3 was all reduced, all was being lower than that of Examples 1-6, wherein the Dv10 of Comparative Example 1 was reduced from 3.21 µm to 3.19 µm, and the Dv10 of Comparative Example 2 was reduced from 3.24 µm to 3.16 µm, which indicated that in the absence of a carbon coating layer and a sparse-silicon inner core, the Dv10 compressive strength of the silicon negative electrode material was both reduced.

**Table 2 Powder resistance, and expansion situation of silicon negative electrode sheet**

| | Powder resistance | Expansion rate |
|---|---|---|
| Example 1 | 0.203 | 46.7% |
| Example 2 | 0.201 | 46.1% |
| Example 3 | 0.194 | 41.7% |
| Example 4 | 0.201 | 41.2% |
| Example 5 | 0.187 | 42.6% |
| Example 6 | 0.164 | 43.8% |
| Comparative Example 1 | 0.243 | 56.4% |
| Comparative Example 2 | 0.313 | 54.4% |
| Comparative Example 3 | 0.186 | 47.3% |

Please refer to Table 2, the powder resistances of Comparative Examples 1-2 were slightly increased, which indicated that adding the carbon coating area and the sparse-silicon inner core could improve the electrical conductivity of the silicon negative electrode material.

The expansion rates of Comparative Examples 1-3 were 56.4%, 54.4%, and 46.3%, respectively. Compared with Example 1, Comparative Examples 1-2 had the highest expansion rates, which indicated that the sparse-silicon inner core and the carbon coating layer had the largest effect on the expansion of the silicon negative electrode material. Therefore, the expansion of the interior silicon was shared by the dispersion of carbon pores, which could effectively slow down the expansion of the silicon negative electrode material in the cycling process.

In Examples 3 and 4, the negative electrode sheet containd two layers of a negative electrode coating A of a fine silicon crystal-type porous silicon negative electrode material; and in Examples 5 and 6, the negative electrode sheet containd both a negative electrode coating A and a negative electrode coating B, and the negative electrode coating A was coated on the negative electrode coating B. These manners could also effectively slow down the expansion of the silicon negative electrode material in the cycling process.

**Table 3 Initial Coulombic efficiency and capacity retention rate of the battery**

| | Capacity retention rate at 25°C | | |
|---|---|---|---|
| | 100th cycle | 500th cycle | 800th cycle |
| Example 1 | 97% | 95% | 84% |
| Example 2 | 96% | 94% | 83% |
| Example 3 | 96% | 95% | 83% |
| Example 4 | 97% | 95% | 84% |
| Example 5 | 98% | 97% | 85% |
| Example 6 | 98% | 96% | 85% |
| Comparative Example 1 | 96% | 92% | 83% |
| Comparative Example 2 | 95% | 89% | 80% |
| Comparative Example 3 | 97% | 85% | 82% |

Please refer to Table 3, compared with Examples 1-6, the silicon negative electrode material of Comparative Example 1 had no sparse-silicon inner core, the silicon negative electrode material of Comparative Example 2 had no carbon coating layer, and in the silicon negative electrode material of Comparative Example 3, a negative electrode coating A was not coated on the outer side of the negative electrode coating B, resulting in lower capacity retention rates compared with those of the Examples 1-6. This indicated that in the silicon negative electrode material of some embodiments of the present disclosure, the carbon coating layer, the sparse-silicon inner core and coating a negative electrode coating A on the outer side of a negative electrode coating B could all increase the capacity retention rate and improve the cycle stability of the battery.

## Claims

1. A porous silicon negative electrode material, wherein the porous silicon negative electrode material comprises a sparse-silicon inner core, and a transition ring, a dense-silicon ring and a carbon coating layer which are sequentially coated on the surface of the sparse-silicon inner core; the sparse-silicon inner core and the transition ring are both silicon-carbon composite layers, the silicon-carbon composite layers comprise a carbon matrix and silicon particles embedded in the carbon matrix, wherein pores are distributed in the carbon matrix; the dense-silicon ring is a silicon layer; wherein in the sparse-silicon inner core, the transition ring and the dense-silicon ring, the porosity sequentially decreases, and the silicon density sequentially increases; the silicon particles comprise at least one of silicon elementary substance and SiOx, where 0<x<2.

2. The porous silicon negative electrode material according to claim 1, wherein in the porous silicon negative electrode material, the mass proportion of the silicon particles is 5%-90%.

3. The porous silicon negative electrode material according to claim 1, wherein the size of the silicon particles is 1.2-20 nm.

4. The porous silicon negative electrode material according to claim 3, wherein the obtained negative electrode material is a fine silicon crystal-type porous silicon negative electrode material with the size of the silicon particles is 1.2-6.8 nm or a coarse silicon crystal-type porous silicon negative electrode material with the size of the silicon particles is 6.8-20 nm.

5. The porous silicon negative electrode material according to claim 1, wherein the silicon content in the sparse-silicon inner core accounts for 45%-87% of the total silicon content, and the silicon content in the transition ring and the dense-silicon ring accounts for 13%-55% of the total silicon content; and the silicon content in the sparse-silicon inner core is greater than the silicon content in the dense-silicon ring, and the silicon content in the dense-silicon ring is greater than the silicon content in the transition ring.

6. The porous silicon negative electrode material according to claim 1, wherein the radius of the sparse-silicon inner core is 3.5-9.5 µm, the thickness of the transition ring is 15-80 nm, and the thickness of the dense-silicon ring is 12-75 nm.

7. The porous silicon negative electrode material according to claim 1, wherein the carbon coating layer comprises a first carbon layer and a second carbon layer, and the first carbon layer is coated on the dense-sificon ring; wherein the first carbon layer is a porous carbon layer and the second carbon layer is a non-porous carbon layer.

8. The porous silicon negative electrode material according to claim 7, wherein the total thickness of the first carbon layer and the second carbon layer is 5-400 nm, and the thickness of the first carbon layer is less than the thickness of the second carbon layer.

9. The porous silicon negative electrode material according to claim 7, wherein the second carbon layer further contains metal elements, and the metal elements comprise at least one of lithium, magnesium and aluminium.

10. The porous silicon negative electrode material according to claim 1, wherein the mass of Si, Qsi, the mass of O, Qo and the mass of C, Qc, in the porous silicon negative electrode material satisfy Osi/Qo ≤ Qsi/Qc.

11. A preparation method for a porous silicon negative electrode material, comprising the following steps:
S1, mixing a silicon source compound, a carbon source compound and a pore-forming agent, vacuumizing same and then heating same once; then introducing a non-oxidizing gas, stabilizing same and then decreasing the temperature to obtain a mixed solid;
S2, heating the mixed solid for a second time and then pulverizing same, and then acid-washing same by using hydrofluoric acid to obtain a porous silicon precursor;
S3, under an atmosphere of the non-oxidizing gas, mixing the porous silicon precursor with monosilane and/or disilane, for a first vapor deposition reaction; then introducing an acetylene mixed gas with the non-oxidizing gas as a carrier gas for a second vapor deposition reaction, so as to obtain a reaction product; and
S4, mixing the reaction product with a dispersant and an additive, and performing spray drying, to obtain the porous silicon negative electrode material.

12. A silicon negative electrode sheet, comprising a negative electrode current collector and a negative electrode material layer formed on at least one side surface of the negative electrode current collector, wherein the negative electrode material layer comprises a negative electrode active material, a conductive agent and a binder, the negative electrode active material comprises a graphite negative electrode material and the porous silicon negative electrode material according to any one of claims 1-10; in the negative electrode active material, the mass proportion of the porous silicon negative electrode material is 0.4-80%.

13. The silicon negative electrode sheet according to claim 12, wherein the negative electrode material layer comprises a negative electrode coating A and/or a negative electrode coating B, and the number of negative electrode material layers on any side surface of the negative electrode current collector is ≤3; wherein the porous silicon negative electrode material in the negative electrode coating A is a fine silicon crystal-type porous silicon negative electrode material, and the porous silicon negative electrode material in the negative electrode coating B is a coarse silicon crystal-type porous silicon negative electrode material; wherein the size of the silicon particles in the fine silicon crystal-type porous silicon negative electrode material is 1.2-6.8 nm, the size of the silicon particles in the coarse silicon crystal-type porous silicon negative electrode material is 6.8-20 nm;
the negative electrode material layer comprises a negative electrode coating A and a negative electrode coating B, and the negative electrode coating A is located outside the negative electrode coating B.

14. The silicon negative electrode sheet according to claim 12, wherein the thickness of the silicon negative electrode sheet is 18-430 µm, and the areal density of the negative electrode material layer on the silicon negative electrode sheet is 0.0028-0.063 g/cm2.

15. A lithium-ion battery, comprising a positive electrode sheet, a negative electrode sheet, a separator and an electrolyte, the separator being configured to separate the positive electrode sheet from the negative electrode sheet, wherein the negative electrode sheet is the silicon negative electrode sheet according to claim 12.

## Patentansprüche

1. Poröses negatives Siliziumelektrodenmaterial, wobei das poröse negative Siliziumelektrodenmaterial einen inneren Kern aus dünnem Silizium und einen Übergangsring, einen Ring aus dichtem Silizium und eine Kohlenstoffbeschichtungsschicht umfasst, die nacheinander auf die Oberfläche des inneren Kerns aus dünnem Silizium aufgebracht sind; der innere Kern aus dünnem Silizium und der Übergangsring beide Silizium-Kohlenstoff-Verbundschichten sind, die Silizium-Kohlenstoff-Verbundschichten eine Kohlenstoffmatrix und in die Kohlenstoffmatrix eingebettete Siliziumpartikel umfassen, wobei in der Kohlenstoffmatrix Poren verteilt sind; der dichte Siliziumring eine Siliziumschicht ist; wobei in dem inneren Kern aus dünnem Silizium, dem Übergangsring und dem Ring aus dichtem Silizium die Porosität nacheinander abnimmt und die Siliziumdichte nacheinander zunimmt; die Siliziumpartikel mindestens eine der Substanzen Silizium-Elementsubstanz und SiOx umfassen, wobei 0<x<2.

2. Poröses negatives Silikonelektrodenmaterial nach Anspruch 1, wobei in dem porösen negativen Siliziumelektrodenmaterial der Massenanteil der Siliziumpartikel 5-90 % beträgt.

3. Poröses negatives Siliziumelektrodenmaterial nach Anspruch 1, wobei die Größe der Siliziumpartikel 1,2-20 nm beträgt.

4. Poröses negatives Siliziumelektrodenmaterial nach Anspruch 3, wobei das erhaltene negative Elektrodenmaterial ein feines poröses Siliziumelektrodenmaterial vom Siliziumkristalltyp mit einer Größe der Siliziumteilchen von 1,2-6,8 nm oder ein grobes poröses Siliziumelektrodenmaterial vom Siliziumkristalltyp mit einer Größe der Siliziumteilchen von 6,8-20 nm ist.

5. Poröses negatives Siliziumelektrodenmaterial nach Anspruch 1, wobei der Siliziumgehalt in dem inneren Kern aus dünnem Silizium 45~87 % des gesamten Siliziumgehalts beträgt, und der Siliziumgehalt in dem Übergangsring und dem Ring aus dichtem Silizium 13-55 % des gesamten Siliziumgehalts beträgt; und der Siliziumgehalt im inneren Kern aus dünnem Silizium größer ist als der Siliziumgehalt im Ring aus dichtem Silizium und der Siliziumgehalt im Ring aus dichtem Silizium größer ist als der Siliziumgehalt im Übergangsring.

6. Poröses negatives Siliziumelektrodenmaterial nach Anspruch 1, wobei der Radius des inneren Kerns aus dünnem Silizium 3,5-9,5 µm beträgt, die Dicke des Übergangsrings 15-80 nm und die Dicke des Rings aus dichtem Silizium 12-75 nm.

7. Poröses negatives Siliziumelektrodenmaterial nach Anspruch 1, wobei die Kohlenstoffbeschichtungsschicht eine erste Kohlenstoffschicht und eine zweite Kohlenstoffschicht umfasst und die erste Kohlenstoffschicht auf dem Ring aus dichtem Silizium aufgebracht ist; wobei die erste Kohlenstoffschicht eine poröse Kohlenstoffschicht ist und die zweite Kohlenstoffschicht eine nicht-poröse Kohlenstoffschicht ist.

8. Poröses negatives Siliziumelektrodenmaterial nach Anspruch 7, wobei die Gesamtdicke der ersten Kohlenstoffschicht und der zweiten Kohlenstoffschicht 5-400 nm beträgt und die Dicke der ersten Kohlenstoffschicht geringer ist als die Dicke der zweiten Kohlenstoffschicht.

9. Poröses negatives Siliziumelektrodenmaterial nach Anspruch 7, wobei die zweite Kohlenstoffschicht ferner Metallelemente enthält und die Metallelemente mindestens eines von Lithium, Magnesium und Aluminium umfassen.

10. Poröses negatives Siliziumelektrodenmaterial nach Anspruch 1, wobei die Masse von Si, Qsi, die Masse von O, Qo, und die Masse von C, Qc, in dem porösen negativen Siliziumelektrodenmaterial Qsi/Qo ≤ Qsi/Qc erfüllen.

11. Herstellungsverfahren für ein poröses negatives Siliziumelektrodenmaterial, umfassend die folgenden Schritte:
S1, Mischen einer Siliziumquellenverbindung, einer Kohlenstoffquellenverbindung und eines porenbildenden Mittels, Vakuumieren derselben und anschließendes einmaliges Erhitzen derselben; dann Einführen eines nicht oxidierenden Gases, Stabilisieren desselben und anschließendes Absenken der Temperatur, um einen gemischten Feststoff zu erhalten;
S2, Erhitzen des gemischten Feststoffs zum zweiten Mal und anschließendes Pulverisieren desselben und anschließendes Säurewaschen desselben mit Flusssäure, um einen porösen Siliziumvorläufer zu erhalten;
S3, unter einer Atmosphäre des nicht-oxidierenden Gases, Mischen des porösen Siliziumvorläufers mit Monosilan und/oder Disilan, für eine erste Aufdampfungsreaktion; anschließend Einführen eines Acetylen-Mischgases mit dem nicht-oxidierenden Gas als Trägergas für eine zweite Aufdampfungsreaktion, um ein Reaktionsprodukt zu erhalten; und
S4. Mischen des Reaktionsprodukts mit einem Dispergiermittel und einem Zusatzstoff und Durchführen einer Sprühtrocknung, um das poröse negative Siliziumelektrodenmaterial zu erhalten.

12. Negative Siliziumelektrodenfolie, umfassend einen negativen Elektrodenstromkollektor und eine negative Elektrodenmaterialschicht, die auf mindestens einer Seitenoberfläche des negativen Elektrodenstromkollektors ausgebildet ist, wobei die negative Elektrodenmaterialschicht ein negatives Elektrodenaktivmaterial, ein leitfähiges Mittel und ein Bindemittel umfasst, wobei das negative Elektrodenaktivmaterial ein negatives Graphitelektrodenmaterial und das poröse negative Siliziumelektrodenmaterial nach einem der Ansprüche 1 bis 10 umfasst; im aktiven negativen Elektrodenmaterial der Massenanteil des negativen Elektrodenmaterials aus porösem Silizium 0,4-80 % beträgt.

13. Negative Siliziumwlektrodenfolie nach Anspruch 12, wobei die negative Elektrodenmaterialschicht eine negative Elektrodenbeschichtung A und/oder eine negative Elektrodenbeschichtung B umfasst und die Anzahl der negativen Elektrodenmaterialschichten auf jeder Seitenoberfläche des negativen Elektrodenstromabnehmers ≤3 ist; wobei das poröse negative Siliziumelektrodenmaterial in der negativen Elektrodenbeschichtung A ein feines poröses Siliziumelektrodenmaterial vom Typ Siliziumkristall ist und das poröse negative Siliziumelektrodenmaterial in der negativen Elektrodenbeschichtung B ein grobes poröses Siliziumelektrodenmaterial vom Typ Siliziumkristall ist; wobei die Größe der Siliziumpartikel in dem feinen porösen Siliziumkristalltyp des negativen Elektrodenmaterials 1,2-6,8 nm beträgt, die Größe der Siliziumpartikel in dem groben porösen Siliziumkristalltyp des negativen Elektrodenmaterials 6,8-20 nm beträgt;
die Schicht aus negativem Elektrodenmaterial eine negative Elektrodenbeschichtung A und eine negative Elektrodenbeschichtung B umfasst, und die negative Elektrodenbeschichtung A sich außerhalb der negativen Elektrodenbeschichtung B befindet.

14. Negative Siliziumelektrodenfolie nach Anspruch 12, wobei die Dicke der negativen Siliziumelektrodenfolie 18-430 µm beträgt und die Flächendichte der negativen Elektrodenmaterialschicht auf der negativen Siliziumelektrodenfolie 0,0028-0,063 g/cm2 beträgt.

15. Lithiumionenbatterie, umfassend eine positive Elektrodenschicht, eine negative Elektrodenschicht, einen Separator und einen Elektrolyten, wobei der Separator konfiguriert ist, um die positive Elektrodenschicht von der negativen Elektrodenschicht zu trennen, wobei die negative Elektrodenschicht die negative Siliziumelektrodenschicht nach Anspruch 12 ist.

## Revendications

1. Matériau d'électrode négative en silicium poreux, dans lequel le matériau d'électrode négative en silicium poreux comprend un noyau interne en silicium dispersé, et un anneau de transition, un anneau en silicium dense et une couche de revêtement en carbone qui sont revêtus séquentiellement sur la surface du noyau interne en silicium dispersé ; le noyau interne en silicium dispersé et l'anneau de transition sont tous deux des couches composites silicium-carbone, les couches composites silicium-carbone comprennent une matrice de carbone et des particules de silicium noyées dans la matrice de carbone, dans lequel des pores sont répartis dans la matrice de carbone ; l'anneau en silicium dense est une couche de silicium ; dans lequel, dans le noyau interne en silicium dispersé, l'anneau de transition et l'anneau en silicium dense, la porosité diminue séquentiellement et la densité de silicium augmente séquentiellement ; les particules de silicium comprennent au moins l'un parmi une substance élémentaire de silicium et du SiOx, où 0 < x < 2.

2. Matériau d'électrode négative en silicium poreux selon la revendication 1, dans lequel, dans le matériau d'électrode négative en silicium poreux, la proportion massique des particules de silicium est de 5 % à 90 %.

3. Matériau d'électrode négative en silicium poreux selon la revendication 1, dans lequel la taille des particules de silicium est de 1,2 à 20 nm.

4. Matériau d'électrode négative en silicium poreux selon la revendication 3, dans lequel le matériau d'électrode négative obtenu est un matériau d'électrode négative en silicium poreux de type à cristaux de silicium fins dont la taille des particules de silicium est de 1,2 à 6,8 nm, ou un matériau d'électrode négative en silicium poreux de type à cristaux de silicium grossiers dont la taille des particules de silicium est de 6,8 à 20 nm.

5. Matériau d'électrode négative en silicium poreux selon la revendication 1, dans lequel la teneur en silicium dans le noyau interne en silicium dispersé représente 45 % à 87 % de la teneur totale en silicium, et la teneur en silicium dans l'anneau de transition et l'anneau en silicium dense représente 13 % à 55 % de la teneur totale en silicium ; et la teneur en silicium du noyau interne en silicium dispersé est supérieure à la teneur en silicium de l'anneau en silicium dense, et la teneur en silicium dans l'anneau en silicium dense est supérieure à la teneur en silicium dans l'anneau de transition.

6. Matériau d'électrode négative en silicium poreux selon la revendication 1, dans lequel le rayon du noyau interne en silicium dispersé est de 3,5 à 9,5 µm, l'épaisseur de l'anneau de transition est de 15 à 80 nm, et l'épaisseur de l'anneau en silicium dense est de 12 à 75 nm.

7. Matériau d'électrode négative en silicium poreux selon la revendication 1, dans lequel la couche de revêtement en carbone comprend une première couche de carbone et une seconde couche de carbone, et la première couche de carbone est revêtue sur l'anneau en silicium dense ; dans lequel la première couche de carbone est une couche de carbone poreuse et la seconde couche de carbone est une couche de carbone non poreuse.

8. Matériau d'électrode négative en silicium poreux selon la revendication 7, dans lequel l'épaisseur totale de la première couche de carbone et de la seconde couche de carbone est de 5 à 400 nm, et l'épaisseur de la première couche de carbone est inférieure à l'épaisseur de la seconde couche de carbone.

9. Matériau d'électrode négative en silicium poreux selon la revendication 7, dans lequel la seconde couche de carbone contient en outre des éléments métalliques, et les éléments métalliques comprennent au moins l'un parmi lithium, magnésium et aluminium.

10. Matériau d'électrode négative en silicium poreux selon la revendication 1, dans lequel la masse de Si, Qsi, la masse de O, Qo et la masse de C, Qc, dans le matériau d'électrode négative en silicium poreux satisfont à Qsi/Qo ≤ Qsi/Qc.

11. Procédé de préparation d'un matériau d'électrode négative en silicium poreux, comprenant les étapes suivantes :
S1, le mélange d'un composé source de silicium, d'un composé source de carbone et d'un agent porogène, la mise sous vide de ceux-ci puis leur chauffage une fois ; puis l'introduction d'un gaz non oxydant, la stabilisation de ceux-ci et la diminution de la température pour obtenir un solide mixte ;
S2, le chauffage une seconde fois du solide mixte et sa pulvérisation, et ensuite son lavage à l'acide en utilisant de l'acide fluorhydrique pour obtenir un précurseur de silicium poreux ;
S3, sous une atmosphère du gaz non oxydant, le mélange du précurseur de silicium poreux avec du monosilane et/ou du disilane, pour une première réaction de dépôt en phase vapeur ; puis l'introduction d'un gaz mixte d'acétylène avec le gaz non oxydant en tant que gaz porteur pour une seconde réaction de dépôt en phase vapeur, de manière à obtenir un produit de réaction ; et
S4, le mélange du produit de réaction avec un dispersant et un additif, et la réalisation d'un séchage par pulvérisation, pour obtenir le matériau d'électrode négative en silicium poreux.

12. Feuille d'électrode négative en silicium, comprenant un collecteur de courant d'électrode négative et une couche de matériau d'électrode négative formée sur au moins une surface latérale du collecteur de courant d'électrode négative, dans laquelle la couche de matériau d'électrode négative comprend un matériau actif d'électrode négative, un agent conducteur et un liant, le matériau actif d'électrode négative comprenant un matériau d'électrode négative en graphite et le matériau d'électrode négative en silicium poreux selon l'une quelconque des revendications 1 à 10 ; dans le matériau actif d'électrode négative, la proportion massique du matériau d'électrode négative en silicium poreux est de 0,4 à 80 %.

13. Feuille d'électrode négative en silicium selon la revendication 12, dans laquelle la couche de matériau d'électrode négative comprend un revêtement d'électrode négative A et/ou un revêtement d'électrode négative B, et le nombre de couches de matériau d'électrode négative sur n'importe quelle surface latérale du collecteur de courant d'électrode négative est ≤ 3 ; dans laquelle le matériau d'électrode négative en silicium poreux dans le revêtement d'électrode négative A est un matériau d'électrode négative en silicium poreux de type à cristaux de silicium fins, et le matériau d'électrode négative en silicium poreux dans le revêtement d'électrode négative B est un matériau d'électrode négative en silicium poreux de type à cristaux de silicium grossiers ; dans laquelle la taille des particules de silicium dans le matériau d'électrode négative en silicium poreux de type à cristaux de silicium fins est de 1,2 à 6,8 nm, la taille des particules de silicium dans le matériau d'électrode négative en silicium poreux de type à cristaux de silicium grossiers est de 6,8 à 20 nm ;
la couche de matériau d'électrode négative comprend un revêtement d'électrode négative A et un revêtement d'électrode négative B, et le revêtement d'électrode négative A est situé à l'extérieur du revêtement d'électrode négative B.

14. Feuille d'électrode négative en silicium selon la revendication 12, dans laquelle l'épaisseur de la feuille d'électrode négative en silicium est de 18 à 430 µm, et la densité surfacique de la couche de matériau d'électrode négative sur la feuille d'électrode négative en silicium est de 0,0028 à 0,063 g/cm2.

15. Batterie lithium-ion, comprenant une feuille d'électrode positive, une feuille d'électrode négative, un séparateur et un électrolyte, le séparateur étant configuré pour séparer la feuille d'électrode positive de la feuille d'électrode négative, dans laquelle la feuille d'électrode négative est la feuille d'électrode négative en silicium selon la revendication 12.
